(19) Europäisches Patentamt
European Patent Office
Office européen des brevets

(11) Veröffentlichungsnummer: **0 385 329 A2**

# (12) EUROPÄISCHE PATENTANMELDUNG

(21) Anmeldenummer: **90103665.7**

(22) Anmeldetag: **26.02.90**

(51) Int. Cl.[5]: **C09K 19/38, C08G 83/00, C08G 85/00, C08J 3/21, C08L 101/02, G03G 5/07**

(30) Priorität: **02.03.89 DE 3906527**

(43) Veröffentlichungstag der Anmeldung: **05.09.90 Patentblatt 90/36**

(84) Benannte Vertragsstaaten: **BE DE ES FR GB IT NL SE**

(71) Anmelder: **BASF Aktiengesellschaft**
**Carl-Bosch-Strasse 38**
**D-6700 Ludwigshafen(DE)**

(72) Erfinder: **Funhoff, Dirk, Dr.**
**Panoramastrasse 3a**
**D-6900 Heidelberg(DE)**
Erfinder: **Leyrer, Reinhold J., Dr.**
**Menzelstrasse 4**
**D-6700 Ludwigshafen(DE)**
Erfinder: **Lauke, Harald, Dr.**
**Sophienstrasse 10**
**D-6800 Mannheim 1(DE)**
Erfinder: **Ringsdorf, Helmut, Prof., Dr.**
**Kehlweg 41**
**D-6500 Mainz-Gonsenheim(DE)**
Erfinder: **Wuestefeld, Renate**
**Lion-Feuchtwanger Strasse 33**
**D-6500 Mainz(DE)**
Erfinder: **Karthaus, Olaf**
**Kurfuerstenstrasse 4**
**D-6500 Mainz(DE)**
Erfinder: **Zerta, Elfriede**
**Friedrich-Ebert Strasse 11**
**D-6093 Floersheim(DE)**

## (54) Polymere diskotisch flüssigkristalline Ladungsübertragungs (charge transfer)- Komplexe, ihre Herstellung und ihre Verwendung.

(57) Polymere diskotisch flüssigkristalline Ladungsübertragungs(charge transfer)-Komplexe aus

A) mindestens einem Polymeren, welches Gruppen chemisch gebunden enthält, die

$a_1$) für sich allein keine flüssigkristalline Phase bilden,

$a_2$) für sich allein eine calamitisch flüssigkristalline Phase bilden oder die

$a_3$) für sich allein eine diskotisch flüssigkristallline Phase bilden,

und

B) mindestens einer niedermolekularen Verbindung oder einem Polymeren mit Elektronenakzeptor- oder Elektronendonorwirkung; die Herstellung dieser neuen Komplexe sowie ein neues Verfahren zur Herstellung einphasiger flüssigkristalliner Polymerblends von ansonsten miteinander völlig oder weitgehend unverträglichen Polymeren, bei welchem die neuen Komplexe gebildet werden.

EP 0 385 329 A2

# Polymere diskotisch flüssigkristalline Ladungsübertragungs(charge transfer)-Komplexe, ihre Herstellung und ihre Verwendung

Die vorliegende Erfindung betrifft neue polymere diskotisch flüssigkristalline Phasen, welche von Polymeren gebildet werden, die Gruppen chemisch gebunden enthalten, die für sich allein keine flüssigkristalline Phasen bilden, für sich allein calamitisch flüssigkristalline Phasen bilden oder für sich allein diskotisch flüssigkristalline Phasen bilden.

Des weiteren betrifft die vorliegende Erfindung ein neues Verfahren zur Induktion diskotisch flüssigkristalliner Phasen in Polymeren, welche die vorstehend genannten Gruppen chemisch gebunden enthalten.

Polymere, welche Gruppen der eingangs genannten Art chemisch gebunden enthalten, sind aus der DE-A-33 34 056 bekannt. Einige dieser bekannten Polymere kommen für Anwendungszwecke in Betracht, wie sie für flüssigkristalline Materialien generell propagiert werden. Außerdem wird in der DE-A-33 34 056 vorgeschlagen, zu Zwecken der Herstellung elektrisch leitender oder photoleitender diskotisch flüssigkristalliner Phasen, in die bekannten Polymere mesogene Reste mit Elektronendonor- oder Elektronenakzeptorwirkung einzubauen. Wie dies im einzelnen durchgeführt werden soll, wird indes nicht angegeben.

Die Anwendungsmöglichkeiten der bekannten Polymere mit den chemisch gebundenen Gruppen der eingangs genannten Art werden jedoch dadurch empfindlich eingeschränkt, daß ihre physikalisch chemischen Eigenschaften, insbesondere ihre Phasenübergänge, d.h. die Existenzbereiche der flüssigkristallinen Phasen, nach ihrer Herstellung festgelegt sind und nicht nachträglich gezielt variiert werden können. Dies ist gerade bei ihrer Verwendung als elektrisch leitende oder photoleitende Materialien sowie als homogene optisch einachsige Materialien ein schwerwiegender Nachteil, weil für jeden speziellen Verwendungszweck ein spezielles Polymer mit angepaßtem Eigenschaftsprofil hergestellt werden muß.

Aufgabe der vorliegenden Erfindung ist es, neue diskotisch flüssigkristalline Phasen zu finden, welche sich aus Polymeren mit chemisch gebundenen Gruppen der eingangs genannten Art herstellen lassen und welche die Nachteile des Standes der Technik nicht mehr länger aufweisen, sondern den bekannten diskotisch flüssigkristallinen Phasen sowohl hinsichtlich der Erhältlichkeit, der Anwendungsmöglichkeiten und der gezielten Variation der Phasenübergänge überlegen sind.

Außerdem ist es die Aufgabe der vorliegenden Erfindung ein neues Verfahren zu finden, mit dessen Hilfe diskotisch flüssigkristalline Phasen gezielt hergestellt werden können.

Überraschenderweise konnten die Aufgaben der vorliegenden Erfindung dadurch elegant gelöst werden, daß niedermolekulare Verbindungen oder Polymere mit Elektronenakzeptor oder Elektronendonorwirkung zu Polymeren mit chemisch gebundenen Gruppen der eingangs genannten Art hinzugegeben werden, wodurch neue polymere diskotisch flüssigkristalline Ladungsübertragungs(charge transfer)-Komplexe mit herausragenden anwendungstechnischen Eigenschaften entstehen.

Gegenstand der vorliegenden Erfindung sind demnach neue polymere diskotisch flüssigkristalline Ladungsübertragungs(charge transfer)-Komplexe aus

A) mindestens einem Polymeren, welches Gruppen chemisch gebunden enthält, die

$a_1$) für sich allein keine flüssigkristalline Phasen bilden,

$a_2$ für sich allein eine calamitisch flüssigkristalline Phase bilden oder die

$a_3$) für sich allein eine diskotisch flüssigkristalline Phase bilden,

und

B) mindestens einer niedermolekularen Verbindung oder einem Polymeren mit Elektronenakzeptor- oder Elektronendonorwirkung.

Ein weiterer Gegenstand der Erfindung ist ein neues Verfahren zur Herstellung diskotisch flüssigkristalliner Phasen, bei welchem man mindestens ein Polymer (A), welches die Gruppen ($a_1$), ($a_2$) und/oder ($a_3$) chemisch gebunden enthält, mit mindestens einer niedermolekularen Verbindung oder einem Polymeren (B) mit Elektronenakzeptor- oder Elektronendonorwirkung umsetzt.

Der Kürze halber werden im folgenden die neuen polymeren diskotisch flüssigkristallinen Ladungsübertragungs(charge transfer)-Komplexe als "erfindungsgemäße Komplexe" und das neue Verfahren zu ihrer Herstellung als "erfindungsgemäßes Verfahren" bezeichnet.

Der eine wesentliche Bestandteil der erfindungsgemäßen Komplexe ist mindestens ein Polymer (A), welches die Gruppen ($a_1$), ($a_2$) und/oder ($a_3$) chemisch gebunden enthält. Demgemäß kommen für die Herstellung der erfindungsgemäßen Komplexe alle Polymere (A) in Betracht, welche Gruppen ($a_1$), ($a_2$) und/oder ($a_3$) enthalten.

Hierbei können die Gruppen ($a_1$), ($a_2$) und/oder ($a_3$) über flexible abstandshaltende Molekülteile entweder in die Polymerhauptketten der erfindungsgemäß zu verwendenden Polymere (A) eingebaut oder über flexible abstandshaltende Molekülteile als Seitengruppen mit den Polymerhauptketten chemisch

verbunden sein.

Unabhängig davon, wie die Gruppen ($a_1$), ($a_2$) und/oder ($a_3$) mit den erfindungsgemäß zu verwendenden Polymeren (A) chemisch verbunden sind, haben sie einheitlich entweder eine mehr oder weniger stark ausgeprägte Elektronendonorwirkung oder eine mehr oder weniger stark ausgeprägte Elektronenakzeptorwirkung, wobei die Gruppen ($a_1$), ($a_2$) und/oder ($a_3$) mit ausgeprägter Elektronendonorwirkung erfindungsgemäß vorteilhaft sind.

Beispiele für besonders vorteilhafte Gruppen ($a_1$), ($a_2$) und/oder ($a_3$) mit ausgeprägter Elektronendonorwirkung sind die Gruppen der allgemeinen Formel I bis VII.

Beispiele für Gruppen ($a_1$), ($a_2$) und ($a_3$) mit ausgeprägter Elektronenakzeptorwirkung sind die Gruppen der allgemeinen Formel (VIII) und die Gruppen, welche sich von den nachstehend beschriebenen niedermolekularen Verbindungen (B) mit Elektronenakzeptorwirkung ableiten, wie z.B. 2,4,7-Trinitrofluorenon oder 2,4,7-Trinitrofluorenyliden-9-malonsäuredinitril.

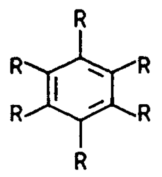

(I)

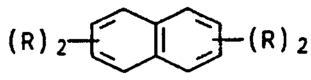

(II)

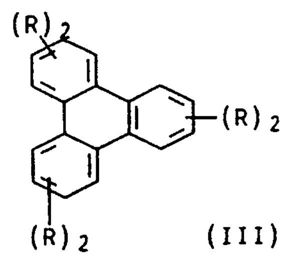

(III)

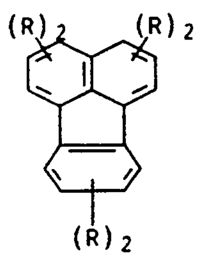

(IV)

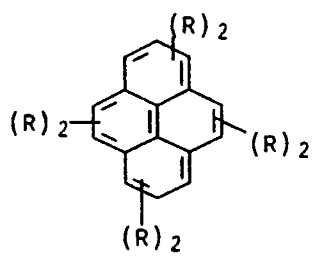

(V)

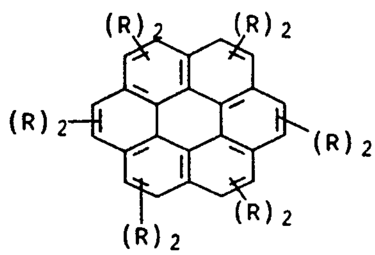

(IV)

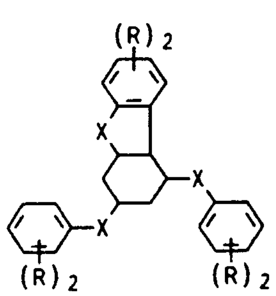

(VII)

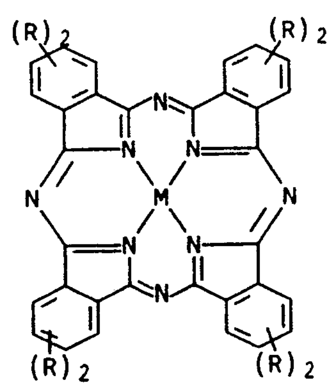

(VIII)

Hiervon werden die Gruppen der allgemeinen Formeln (I) und (III) erfindungsgemäß bevorzugt verwendet, wobei die Gruppe der allgemeinen Formel (III) ganz besonders vorteilhaft ist.

Hierbei bezeichnet die Variable X der allgemeinen Formel VII ein Sauerstoff- oder ein Schwefelatom oder eine Imino-, Methylen- oder Carbonylgruppe, und die Variable M der allgemeinen Formel VIII steht für

ein Übergangsmetallkation wie $Cu^{2\oplus}$, $Ni^{2\oplus}$ oder $Fe^{2\oplus}$, ein Hauptgruppenmetallkation wie $Al^{3\oplus}$ oder ein Titanyl-, Vanadinyl-, $Al(OH)^{2\oplus}$ oder $SiO^{2\oplus}$-Kation.

Wie vorstehend erwähnt, können die Gruppen ($a_1$), ($a_2$) und/oder ($a_3$), insbesondere die der allgemeinen Formeln (I) bis (VIII), entweder in die Polymerhauptketten der erfindungsgemäß zu verwendenden Polymere (A) eingebaut sein oder sie liegen als Seitengruppen oder in Seitengruppen mit den Polymerhauptketten chemisch verbunden vor. Demgemäß erfolgt der Einbau der Gruppen ($a_1$), ($a_2$) und/oder ($a_3$) der allgemeinen Formel (I) bis (VIII) in die Polymerhaupketten über zwei der in der betreffenden Gruppe ($a_1$), ($a_2$) und/oder ($a_3$) vorhandenen Reste R, wogegen die chemische Verknüpfung der Gruppe ($a_1$), ($a_2$) und/oder ($a_3$) als oder in der Seitengruppe über einen der Reste R erfolgt. In beiden Fällen kann der betreffende Rest R bereits einen flexiblen abstandshaltenden Molekülteil darstellen oder mit einem solchen verknüpft sein.

Dementsprechend stehen in den allgemeinen Formeln (I) bis (VIII) ein oder zwei Reste R für einen Rest der allgemeinen Formel (IXa)

-Y-Z-A- (IXa)

und die restlichen Reste R für Reste der allgemeinen Formel (IX)

-Y-Z-AH (IX).

In den Formeln (IX) und (IXa) stehen

die Variable Y für eine $(-CH_2-)_n$ oder

$$-\overset{\overset{CH_3}{|}}{C}H-\text{Gruppe}$$

der Index n für 0, 1, 2 oder 3,

die Variable Z für eine chemische Bindung oder eine

$$-O-,\ -S-,\ -\overset{R^1}{N}-,\ -SO_2-,\ -\overset{O}{C}-,\ -\overset{O}{C}-,\ -O-\overset{O}{C}-,\ -\overset{O}{C}-O-,$$

$$-S-\overset{O}{C}-,\ -\overset{O}{C}-S-,\ -\overset{R^1}{N}-\overset{O}{C}-\ \text{oder}\ -\overset{O}{C}-\overset{R^1}{N}-\text{Gruppe},$$

die Variable $R^1$ für Wasserstoff oder $C_1$- bis $C_4$-Alkyl,

die Variable AH für $C_4$- bis $C_{20}$-Alkyl, $C_4$- bis $C_{20}$-Alkylphenyl oder $C_4$- bis $C_{20}$-Alkoxyphenyl und

die Variable A für ein gegebenenfalls substituiertes Alkylen, das sich von den für AH genannten Alkylresten ableitet, wobei die Alkylkette in AH und/oder die Alkylenketten in -A- gebenenfalls durch -O-, -S- und/oder

$$-\overset{R^1}{N}-$$

unterbrochen sind und der Abstand zwischen zwei Heteroatomen mindestens 2 C-Atome beträgt.

Die Bindung der zwei Reste R in den Polymerhauptketten der erfindungsgemäß zu verwendenden Polymeren (A) bzw. des einen Restes R an die Polymeren (A) kann über eine chemische Bindung oder über eine

$$-\overset{O}{C}-O-,\ -O-\overset{O}{C}-,\ -\overset{R^1}{N}-\overset{O}{C}-,$$

$$-\overset{O}{C}-\overset{R^1}{N}-,\ -\overset{H}{N}-\overset{O}{C}-O-,\ -\overset{H}{N}-\overset{O}{C}-\overset{R^1}{N}-,\ -O-\overset{O}{C}-\overset{H}{N}-\ \text{oder}\ -\overset{R^1}{N}-\overset{O}{C}-\overset{H}{N}-\text{Gruppe erfolgen.}$$

Die zwei Reste R, bzw. der eine Rest R können auch über flexible abstandshaltende Molekülteile (Spacer) im Polymeren (A) bzw. an das Polymere (A) gebunden sein. Als flexible abstandshaltende Molekülteile oder sogenannte Spacer kommen vor allem Alkylengruppen mit 2 bis 12 C-Atomen in Betracht, die linear oder verzweigt und deren Kette durch -O-, -S- oder

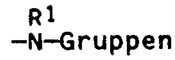

unterbrochen sein können.

Beispiele geeigneter Spacer sind

$-(CH_2)_2-$, $-(CH_2)_3-$, $-(CH_2)_4-$, $-(CH_2)_5-$, $-(CH_2)_6-$, $-(CH_2)_8-$, $-(CH_2)_{10}-$, $-(CH_2)_{12}-$, $-(CH_2)_2-O-(CH_2)_2-$, $-(-CH_2-CH_2-O-)_3-$, $-(-CH_2-CH_2-O-)_4-$, $-(CH_2)_2-S-(CH_2)_2-$, 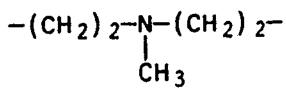 und 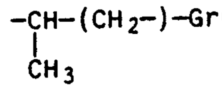-Gruppen.

Die Spacer können an den einen Rest R bzw. an die beiden Reste R und an das Polymere (A) bzw. im Polymeren (A) über eine chemische Bindung oder über eine

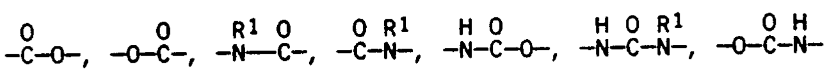
oder
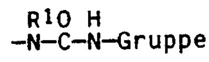-Gruppe

gebunden sein.

Beispiele geeigneter Alkylenreste Y sind $-CH_2-$, $-(CH_2-)_2-$ , $-(CH_2-)_3-$ und

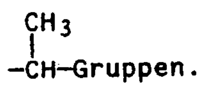-Gruppen.

Der Rest $R^1$ steht für $C_1$- bis $C_4$-Alkyl wie Methyl oder Ethyl. Vorzugsweise ist $R^1$ Methyl und insbesondere Wasserstoff.

Für die Variable AH sind z.B. im einzelnen zu nennen:

als $C_4$- bis $C_{20}$-Alkyl: n-Butyl, Pentyl, Hexyl, Heptyl, Octyl, 2-Ethyl-hexyl, Nonyl, Decyl, Dodecyl, Tetradecyl, Hexadecyl, Octadecyl und Eicosyl;

als $C_4$- bis $C_{20}$-Alkylphenyl: 4-Butylphenyl, 4-Pentylphenyl, 4-Hexylphenyl, 4-Octylphenyl, 4-(1′,1′,3′,3′-Tetramethylbutyl)-phenyl, 4-Nonylphenyl, 4-Decylphenyl, 4-Undecylphenyl, 4-Dodecylphenyl, 4-Tridecylphenyl, 4-Tetradecylphenyl, 4-Hexadecylphenyl, 4-Octaphenyldecyl und 4-Eicosylphenyl; und

als $C_4$- bis $C_{20}$-Alkoxyphenyl; 4-Butoxyphenyl, 4-Pentoxyphenyl, 4-Hexoxyphenyl, 4-Octoxyphenyl, 4-(2′-Ethylhexoxy)-phenyl, 4-Nonoxyphenyl, 4-Decoxyphenyl, 4-Undecoxyphenyl, 4-Dodecoxyphenyl, 4-Tridecoxyphenyl, 4-Tetradecoxyphenyl, 4-Pentadecoxyphenyl, 4-Hexadecoxyphenyl, 4-Heptadecoxyphenyl, 4-Octadecoxyphenyl, 4-Nonodecoxyphenyl und 4-Eicosyloxyphenyl.

Als von AH abgeleitete $C_4$- bis $C_{20}$-Alkylenreste sind z.B. zu nennen:

Butylen-1,4 und -1,3, Pentylen-1,5, Hexylen-1,6, Octylen-1,8, Decylen-1,10, Dodecylen, Hexadecylen und Octadecylen.

Für die Variablen AH und A sind $C_4$- bis $C_{12}$-Alkyl bzw. $C_4$- bis $C_{12}$-Alkylen bevorzugt.

Die Variable Y steht vorzugsweise für

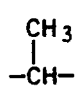

oder $-(CH_2-)_n$ mit n = 0,1 oder 2.

Als Variable Z sind -O-, -S-, $-SO_2-$,

$$-O\overset{O}{C}-,\quad -\overset{O}{C}-O-,\quad -\overset{H}{N}-\overset{O}{C}-\text{ und }-\overset{O}{C}-NH-\text{Gruppen},$$

bevorzugt.

Die Anknüpfung (Anbindung) der Gruppen ($a_1$), ($a_2$) und/oder ($a_3$) der allgemeinen Formeln (I) bis (VIII) im Polymeren (A) erfolgt über eine chemische Bindung oder vorzugsweise über

$$-O-,\quad -\overset{O}{C}-O-,\quad -O-\overset{O}{C}-,\quad -NH-\overset{O}{C}-,\quad -\overset{O}{C}-NH-,\quad -O-\overset{O}{C}-NH\text{ oder }-NH-\overset{O}{C}-O-\text{Gruppen}.$$

An die Polymerkette sind die Gruppe ($a_1$), ($a_2$) und/oder ($a_3$) der allgemeinen Formeln (I) bis (VIII), vorzugsweise über die für die Variable Z als bevorzugt genannten Gruppen, gebunden oder auch über -Y-Z, wobei die Variable Y für

$$-\overset{CH_3}{\overset{|}{C}H}-$$

oder $-(CH_2-)_n$ mit dem Index n = 1 oder 2 steht.

In den erfindungsgemäß bevorzugt verwendeten Gruppen ($a_1$), ($a_2$) und/oder ($a_3$) der Formeln (I), (III) und (VIII) ist R vorzugsweise ein Rest der Formeln

$-Y'-Z'-A-$ (Xa), bzw.

$-Y'-Z'-AH$ (X),

in denen

die Variable Y′ für eine chemische Bindung,

$$-\overset{CH_3}{\overset{|}{C}H}-$$

oder $-CH_2-$ und die Variable Z′ für eine chemische Bindung oder für eine -O-, -S-, $-SO_2-$, -NH-,

$-O\overset{O}{C}-$,

$-O\overset{O}{C}-NH-$, oder

$-NH-\overset{O}{C}-NH-$Gruppe stehen und die Variablen A und AH die oben angegebene Bedeutung haben.

Vorzugsweise steht die Variable AH für $C_4$- bis $C_{12}$-Alkyl, insbesondere n-Pentyl, oder 3,6-Dioxaheptyl und die Variable A für $C_4$-bis $C_{12}$-Alkylen, insbesondere n-Pentan-1,5-diyl.

Bei den erfindungsgemäß bevorzugt verwendeten Gruppen ($a_1$), ($a_2$) oder ($a_3$) der allgemeinen Formel (I) ist die Variable Y′ vorzugsweise eine $-CH_2$-oder

$$-\overset{CH_3}{\overset{|}{C}H}-\text{Gruppe}$$

oder eine chemische Bindung und die Variable Z′ eine chemische Bindung oder eine -O-, -S-, -NH-, $-SO_2-$,

$-O-\overset{O}{C}-$,

$-O-\overset{O}{C}-NH-$ oder

$-NH-\overset{O}{C}-NH-$Gruppe.

Bei den erfindungsgemäß ganz besonders bevorzugt verwendeten Gruppen ($a_1$), ($a_2$) oder ($a_3$) der allgemeinen Formel (III) ist die Variable Y′ vorzugsweise eine chemische Bindung und die Variable Z′ eine chemische Bindung oder eine -O-, -S-,

$-O-\overset{O}{C}-$,

$-\overset{O}{C}-O-$ oder

$-\overset{O}{C}-NH-$Gruppe.

Die Variable A bzw. AH hat die vorstehend angegebene Bedeutung.

Die erfindungsgemäß zu verwendenden Polymere (A), welche die Gruppen ($a_1$), ($a_2$) und/oder ($a_3$) chemisch gebunden enthalten, können nach an sich bekannten und in der Polymerchemie üblichen Verfahren hergestellt werden. Dabei ist zwischen den Polymeren (A) zu unterscheiden, in denen die Gruppen ($a_1$), ($a_2$) und/oder ($a_3$) als Kettenglied in den Polymerhauptketten gebunden sind und solchen, in denen die Gruppe ($a_1$), ($a_2$) und/oder ($a_3$) als Seitengruppen oder an Seitengruppen gebunden vorliegen.

Die Polymeren (A), in denen die Gruppen ($a_1$), ($a_2$) und/oder ($a_3$) als Kettenglieder in den Polymerhauptketten gebunden sind, können z.B. durch Polykondensation von Verbindungen, welche zwei endständige Carboxylgruppen oder deren funktionellen Derivate im Molekül enthalten, mit Komponenten, welche zwei endständige mit der Carboxylgruppe oder deren funktionellen Derivaten reagierende reaktionsfähige Gruppen wie Hydroxyl, Amino oder Mercapto im Molekül enthalten, hergestellt werden. Die Gruppen ($a_1$), ($a_2$) und/oder ($a_3$) können hierbei sowohl Carboxylgruppen oder funktionelle Derivate der Carboxylgruppen als auch mit den Carboxylgruppen reagierende Gruppen tragen. Als Polymere (A) sind Polyester und Polyamide, insbesondere Polyester bevorzugt.

Ein weiteres Verfahren zur Herstellung von erfindungsgemäß zu verwendenden Polymeren (A), in denen die Gruppen ($a_1$), ($a_2$) und/oder ($a_3$) Glieder der Polymerhauptketten sind, ist die Polyaddition von Diisocyanaten mit endständigen Isocyanatgruppen mit Verbindungen, die mit Isocyanat reagierende Substituenten tragen. Auch in diesem Fall kann die die Gruppen ($a_1$), ($a_2$) und/oder ($a_3$) liefernde Verbindung sowohl die Isocyanatreste als auch die mit dem Isocyanat reagierenden Reste tragen. Als mit dem Isocyanat reagierende Reste kommen vorzugsweise Mercapto- und Amino- und insbesondere Hydroxygruppen in Betracht.

Dabei sollte der Abstand der Gruppen ($a_1$), ($a_2$) und/oder ($a_3$) in den Polymerhauptketten mindestens 4 Kettenglieder betragen.

Die Umsetzung erfolgt in an sich bekannter Weise unter üblichen Bedingungen. Die Reaktionstemperaturen liegen bei 50 °C. Als Lösungsmittel sind Ketone wie Methylethylketon oder Aceton oder Ether wie Tetrahydrofuran geeignet. Übliche Katalysatoren sind z.B. Dibutylzinnlaurat und 1,4-Diazabicyclo-[2,2,2]-octan. Diese werden im allgemeinen in Konzentrationen von 0,1 bis 1 Gew.-%, bezogen auf die gesamte Mischung, angewendet.

Die erfindungsgemäß zu verwendenden Polymere (A), welche die Gruppen ($a_1$), ($a_2$) und/oder ($a_3$) in den Seitengruppen oder als Seitengruppen enthalten, können z.B. durch polymeranaloge Reaktionen hergestellt werden.

So können z.B. in polymere Verbindungen der allgemeinen Formel (XI),

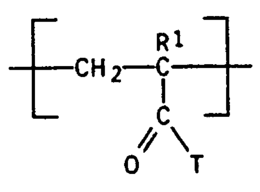

(XI)

in der die Variable T ein substituierbarer Rest wie Hydroxy, Chlor oder niedermolekulares Alkoxy ist, durch Veresterung, Umesterung oder Acylierung Gruppen ($a_1$), ($a_2$) und/oder ($a_3$) über eine an einem Rest R endständige Hydroxyl-, Mercapto- oder Aminogruppe eingeführt werden.

Die Methoden sind an sich bekannt (C.M. Paleos et al.: J. Polym. Sci. Polym. Chem. Ed., 19, 1427 (1981)).

Der Austausch von T kann auch mit einer reaktionsfähigen Gruppe eines an den Rest R gebundenen Spacers erfolgen.

Bei der Verwendung von Vorstufen der Gruppen ($a_1$), ($a_2$) und/oder ($a_3$), welche eine endständige

Carboxylgruppe oder deren funktionellen Derivate tragen, muß das Polymere Amino-, Mercapto- oder Hydroxylgruppen enthalten. Solche Polymere können z.B. durch Copolymerisation von (Meth)-Acrylsäurehalbestern von $\alpha,\omega$-Diolen mit weiteren Comonomeren erhalten werden.

Die polymeranaloge Umsetzung erfolgt dann in an sich bekannter Weise.

Eine weitere Möglichkeit, die Gruppen ($a_1$), ($a_2$) und/oder ($a_3$) an die Polymerhauptketten zu binden, ist die Umsetzung von einen Isocyanatrest tragenden Vorstufen der Gruppen ($a_1$), ($a_2$) und/oder ($a_3$) mit Polymeren, die mit Isocyanat reagierende Substituenten aufweisen, z.B. mit den vorstehend genannten Hydroxylgruppen tragenden Copolymeren.

Der Isocyanatrest kann in die Vorstufe der Gruppe ($a_1$), ($a_2$) und/oder ($a_3$) z.B. durch Umsetzen einer Vorstufe, die an einem Rest R einen mit Isocyanat reagierenden Substituenten wie -OH, -SH oder $-NH_2$ trägt, mit einem Diisocyanat im Molverhältnis 1 : 1 eingeführt werden.

Die Umsetzung der einen Isocyanatrest tragenden Vorstufe der Gruppe ($a_1$), ($a_2$) und/oder ($a_3$) mit dem reaktionsfähige Substituenten tragenden Polymeren erfolgt nach an sich bekannten Verfahren.

Umgekehrt ist es auch möglich, Isocyanatreste in die Polymeren einzuführen und die Isocyanatreste mit Vorstufen der Gruppen ($a_1$), ($a_2$) und/oder ($a_3$) umzusetzen, die an einem Rest R einen endständigen mit Isocyanat reagierenden Substituenten tragen.

Die erfindungsgemäß zu verwendenden Polymere (A), welche die Gruppen ($a_1$), ($a_2$) und/oder ($a_3$) als Seitengruppen oder in den Seitengruppen enthalten, können außerdem durch (Co)Polymerisation von ethylenisch ungesättigten Verbindungen der allgemeinen Formel (XII),

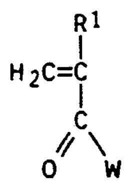

(XII)

gegebenenfalls mit weiteren olefinisch ungesättigten Verbindungen, die mit (XII) copolymerisierbar sind, hergestellt werden.

In der allgemeinen Formel (XII) steht die Variable W für eine gegebenenfalls über einen Spacer an das C-Atom des Carbonylrestes gebundene Gruppe ($a_1$), ($a_2$) und/oder ($a_3$), wobei die Anbindung über -O-, -S- oder

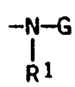Gruppen erfolgt.

Als Comonomere für die Copolymerisation von Verbindungen der allgemeinen Formel (XII) bzw. als Comonomere für die Herstellung der für die polymeranalogen Umsetzungen benötigten Polymere kommen solche Monomere in Betracht, die Homo- oder Copolymere mit Glastemperaturen von $\leq 100^{\circ}$ C liefern.

Der Polymerisationsgrad liegt in der Regel zwischen 5 und 500, vorzugsweise bei $\geq$ 10 und 100.

Als Monomere kommen vor allem in Betracht:

$C_1$- bis $C_{20}$-, vorzugsweise $C_4$- bis $C_8$-Alkylester der Acrylsäure und/oder der Methacrylsäure, Gemische dieser Ester sowie Gemische der genannten Ester mit Acrylnitril, Methacrylnitril, Styrol, 4-Methylstyrol, Acrylamid und/oder Methacrylamid.

Als Monomere kommen neben den bestimmt genannten im einzelnen z.B. in Betracht:

Methylacrylat, Ethylacrylat, Propylacrylat, n-Butylacrylat, Isobutylacrylat, Hexylacrylat, n-Octylacrylat, 2-Ethylhexylacrylat, Nonylacrylat, Decylacrylat, Hexadecylacrylat, Octadecylacrylat sowie die entsprechenden Methacrylate.

Bevorzugt sind die genannten Acrylate und Methacrylate von Alkanolen mit 4 bis 8 C-Atomen.

Die Herstellung dieser erfindungsgemäß zu verwendenden Polymeren (A) erfolgt nach bekannten Verfahren, vorzugsweise durch radikalische Polymerisation.

Die erfindungsgemäß zu verwendenden Polymeren (A), welche die Gruppen ($a_1$), ($a_2$) und/oder ($a_3$) als Seitengruppen oder in den Seitengruppen gebunden enthalten, können außerdem durch Addition von polarisierbaren, reaktionsfähigen Wasserstoff tragenden Resten an olefinische Doppelbindungen erhalten werden.

So können z.B. Poly-Organo-Wasserstoff-Siloxane mit eine endständige Vinylgruppen enthaltenden Vorstufen der Gruppen ($a_1$), ($a_2$) und/oder ($a_3$) gegebenenfalls in Lösungsmitteln in Anwesenheit von Katalysatoren, insbesondere Hexachloroplatinsäure, die die Anlagerung von an Silicium gebundenem Wasserstoff an aliphatische Mehrfachbindungen beschleunigen, umgesetzt werden.

Diese Umsetzungen erfolgen in an sich bekannter Weise (H. Ringsdorf, A. Schneller; Brit. Polym. Journal 13, 43 (1981); H. Ringsdorf, A. Schneller Makromol. Rapid Comm. Vo. 3, 557 (1982)).

Beispiele erfindungsgemäß bevorzugt verwendeter Polymere (A) sind diejenigen, welche die Gruppen ($a_1$), ($a_2$) und/oder ($a_3$) der allgemeinen Formel (III) enthalten.

Beispiele für erfindungsgemäß ganz besonders bevorzugt verwendete Polymere (A) der genannten Art sind die Polymeren (A-1) bis (A-6):

(A-1)

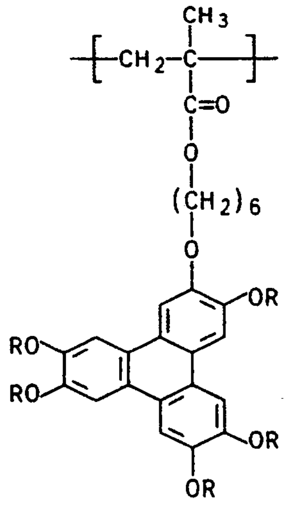

,

worin der Rest R n-Pentyl bedeutet;

(A-2)

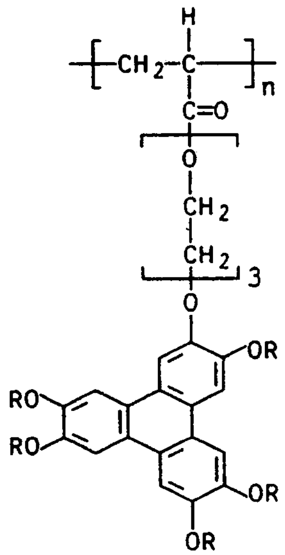

,

worin der Rest R 3,6-Dioxahept-1-yl bedeutet;

(A-3) -

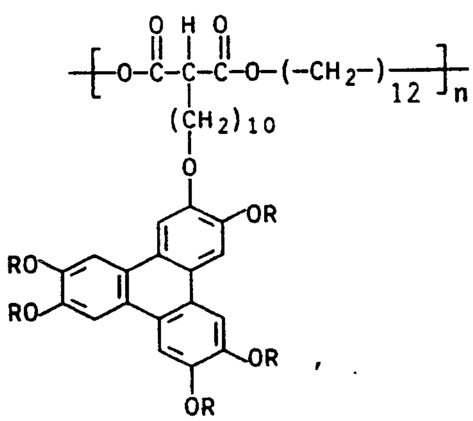

,

worin der Rest R n-Pentyl bedeutet; sowie

(A-4), (A-5) und (A-6)

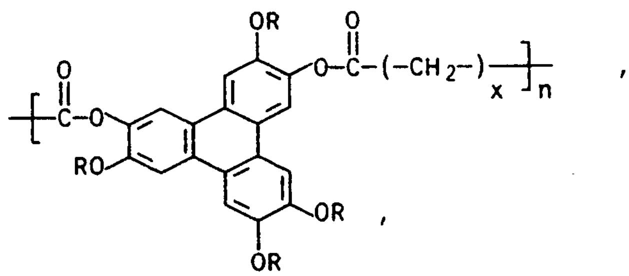

wobei der Index x die folgende Werte hat:
Im Falle von (A-4) gleich 10,
im Falle von (A-5) gleich 14 und
im Falle von (A-6) gleich 20;
und wobei der Rest R in allen drei Polymeren (A) n-Pentyl bezeichnet.

Bei diesen erfindungsgemäß ganz besonders bevorzugt verwendeten Polymeren (A) handelt es sich demnach um Polymere (A), welche chemisch gebundene Gruppen ($a_1$), ($a_2$) und/oder ($a_3$) mit Elektronendonorwirkung enthalten.

Neben den chemisch gebundenen Gruppen ($a_1$), ($a_2$) und/oder ($a_3$) können die erfindungsgemäß zu verwendenden Polymeren (A) weitere Gruppen enthalten, mit deren Hilfe das Eigenschaftsprofil der Polymeren (A) gezielt variiert werden kann.

Beispiele gut geeigneter Gruppen sind Gruppen, welche pleiochroitische Farbstoffreste und Sensibilisatorreste, die das Polymer (A) gegenüber ultraviolettem, sichtbarem oder infrarotem Licht sensibilisieren, enthalten. Gut geeignete Gruppen dieser Art können in die Polymerhauptketten der erfindungsgemäß zu verwendenden Polymeren (A) eingebaut sein oder als Seitengruppen hierzu vorliegen. Sofern sie mitverwendet werden, soll ihre Anzahl in dem betreffenden Polymeren (A) nicht so hoch sein, daß sie die Bildung diskotisch flüssigkristalliner Phasen, sprich der erfindungsgemäßen Komplexe, beeinträchtigen. Beispiele gut geeigneter Gruppen der genannten Art gehen aus der DE-A-32 11 400 hervor.

Der weitere wesentliche Bestandteil der erfindungsgemäßen Komplexe ist mindestens eine niedermolekulare Verbindung oder ein Polymer (B) mit entweder Elektronendonor- oder Elektronenakzeptorwirkung. Dies bedeutet, daß die niedermolekularen Verbindungen oder die Polymeren (B) grundsätzlich in der Lage sind, mit geeigneten Elektronenakzeptoren oder Elektronendonatoren sogenannte Ladungsübertragungs- oder charge transfer-Komplexe zu bilden, wobei selbstredend stets Elektronenakzeptoren (B) mit Elektronendonatoren in den Polymeren (A) und Elektronendonatoren (B) mit Elektronenakzeptoren in den Polymeren (A) umgesetzt werden.

Beispiele geeigneter erfindungsgemäß zu verwendender niedermolekularer Verbindungen (B) entstammen den Verbindungsklassen der Aromaten und Heteroaromaten, welche aufgrund ihrer Strukturen und Bindungszustände ein ebenes und starres Grundgerüst haben. Hierbei sind die niedermolekularen Verbindungen (B), welche der Verbindungsklasse der Aromaten entstammen, erfindungsgemäß bevorzugt und diejenigen, welche der Unterklasse der mehrkernigen kondensierten Aromaten entstammen, besonders bevorzugt.

Ob die erfindungsgemäß bevorzugten oder besonders bevorzugten niedermolekularen Verbindungen (B) Elektronendonor- oder Elektronenakzeptorwirkung aufweisen, richtet sich zum einen danach, ob sie elektronenabgebende oder elektronenanziehende Substituenten tragen, und zum anderen danach, wie ausgeprägt die Elektronenakzeptor- oder Elektronendonorwirkung der Gruppen ($a_1$), ($a_2$) und/oder ($a_3$) im Polymer (A) ist, mit welchen sie umgesetzt werden sollen.

Beispiele geeigneter elektronenabgebender Substituenten für niedermolekulare Verbindungen (B) mit Elektronendonorwirkung sind die vorstehend im Detail beschriebenen Reste R der allgemeinen Formeln (IX) und (X).

Beispiele geeigneter niedermolekularer Verbindungen (B) mit Elektronendonorwirkung sind Verbindungen der allgemeinen Formeln (I) bis (VII), worin alle Reste R den allgemeinen Formeln (IX) und (X) entsprechen.

Beispiele geeigneter elektronenanziehender Substituenten sind Halogenatome wie Fluor-, Chlor- und Bromatome sowie Nitro-, Cyano-, Chinon- und Perfluoralkyl- und Perfluorarylgruppen, von denen die

Halogenatome sowie die Nitro-, Cyano- und Chinongruppen besonders gut geeignet sind.

Beispiele geeigneter niedermolekularer Verbindungen (B) mit Elektronenakzeptorwirkung sind demnach mit Halogenatomen und/oder mit Nitro-, Cyano-, Chinon- und/oder Perfluoralkyl- und/oder Perfluorarylgruppen substituierte einkernige sowie mehrkernige kondensierte Aromaten, deren Eigenschaftprofil durch weitere sonstige Substituenten variiert werden kann.

Weitere Beispiele geeigneter niedermolekularer Verbindungen (B) mit Elektronenakzeptorwirkung sind Verbindungen der allgemeinen Formel (VIII), worin alle Reste R den allgemeinen Formeln (IX) und (X) entsprechen.

Beispiele gut geeigneter niedermolekularer Verbindungen (B) mit Elektronenakzeptorwirkung sind Hexafluorbenzol, Hexachlorbenzol, Perfluornaphthalin, Pikrylchlorid, Bromtrinitrobiphenyl, Tetracyanochinon, Tetracyanochinodimethan, Tetrachlorperylendicarbonsäurediimid, di-, tri-, und tetranitrosubstituierte Anthrachinone sowie di-, tri- und tetranitrosubstituierte Fluorenone und deren Derivate wie 2,4,7-Trinitrofluorenon und 2,4,7-Trinitrofluorenyliden-9-malonsäuredinitril, von denen die beiden letztgenannten niedermolekularen Verbindungen (8) besonders gut geeignet sind und daher erfindungsgemäß besonders bevorzugt für die Herstellung der erfindungsgemäßen Komplexe verwendet werden.

Die vorstehend im Detail beschriebenen niedermolekularen Verbindungen (B) mit Elektronenakzeptorwirkung können aber auch als elektronenanziehende Gruppen in Polymeren (B) mit Elektronenakzeptorwirkung vorliegen. Hierbei können diese elektronenanziehenden Gruppen, welche sich von den niedermolekularen Verbindungen (B) mit Elektronenakzeptorwirkung ableiten, im Polymeren (B) in dessen Polymerhauptkette oder als Seitengruppen vorliegen.

Die erfindungsgemäßen Komplexe können demnach durch die folgenden Kombinationen von erfindungsgemäß zu verwendenden wesentlichen Bestandteilen (A) und (B) gebildet werden:

Kombination 1:

Polymer (A), welches chemisch gebundene Gruppen ($a_1$), ($a_2$) und/oder ($a_3$) mit Elektronendonorwirkung enthält, mit niedermolekularen Verbindungen (B) mit Elektronenakzeptorwirkung;

Kombination 2:

Polymer (A), welches chemisch gebundene Gruppen ($a_1$), ($a_2$) und/oder ($a_3$) mit Elektronendonorwirkung enthält, mit einem Polymer (B) mit Elektronenakzeptorwirkung, welches Gruppen enthält, die sich von den niedermolekularen Verbindungen (B) mit Elektronenakzeptorwirkung ableiten; und

Kombination 3:

Polymer (A), welches chemisch gebundene Gruppen ($a_1$), ($a_2$) und/oder ($a_3$) mit Elektronenakzeptorwirkung enthält und daher mit dem Polymeren (B) der Kombination 2 gleichzusetzen ist, mit niedermolekularen Verbindungen (B) mit Elektronendonorwirkung.

Von diesen Kombinationen 1, 2 und 3 ist die Kombination 1 erfindungsgemäß ganz besonders vorteilhaft.

In den erfindungsgemäßen Komplexen liegen die beiden wesentlichen Bestandteile (A) und (B) in einem Molverhältnis (A) : (B) von 1 : 1 bis 100 : 1 vor. Es kann in speziellen Fällen von Vorteil sein, das Molverhältnis (A) : (B) kleiner als 1 : 1, beispielsweise 0,99 : 1 bis 0,1 : 1, zu wählen. Die zusätzlichen Vorteile, welche sich hierbei für die Bildung diskotisch flüssigkristalliner Phasen ergeben, werden indes in den allermeisten Fällen bereits durch geringere Mengen an Bestandteilen (B) erzielt. Andererseits ist es in speziellen Fällen möglich, das Molverhältnis (A) : (B) größer als 100 : 1, beispielsweise 101 : 1 bis 2000 : 1 zu wählen und trotzdem die gewünschte diskotisch flüssigkristalline Phase zu erzeugen. Im allgemeinen empfiehlt es sich aber, den oben angegebenen optimalen Bereich von 1 : 1 bis 100:1 für das Molverhältnis (A) : (B) auszuwählen. Innerhalb dieses optimalen Bereichs sind die Molverhältnisse (A) : (B) von 50 : 1 bis 1 : 1, vorzugsweise 25 : 1 bis 1 : 1 und insbesondere 10 : 1 bis 1 : 1 hervorzuheben, weil aufgrund solcher Molverhältnisse (A) : (B) besonders vorteilhafte erfindungsgemäße Komplexe mit herausragenden anwendungstechnischen Eigenschaften resultieren.

Demgemäß sind erfindungsgemäße Komplexe eines Molverhältnisses (A) : (B) von 10 : 1 bis 1 : 1 besonders vorteilhaft

Zusätzliche Vorteile ergeben sich, wenn die erfindungsgemäßen Komplexe die Polymeren (A), welche Gruppen der allgemeinen Formeln (I) bis (VII), vorzugsweise (I) und (III) und insbesondere (III) chemisch gebunden enthalten, und die niedermolekulare Verbindungen (B) mit Elektronenakzeptorwirkung in dem Molverhältnis (A) : (B) von 10 : 1 bis 1 : 1 enthalten.

Methodisch weist die Herstellung der erfindungsgemäßen Komplexe keine Besonderheiten auf, sondern erfolgt durch molekulardisperse Vermischung ihrer wesentlichen Bestandteile (A) und (B), welche amorph, kristallin oder flüssigkristallin sein können, in dem gewünschten Molverhältnis, wobei dies insbesondere in der Schmelze, in der Suspension, in der Emulsion oder in der Lösung durchgeführt wird. Wird die molekulardisperse Vermischung in Lösung durchgeführt, wird ein geeignetes Lösungsmittel oder Lösungsmittelgemisch verwendet, welches beide wesentlichen Bestandsteile (A) und (B) der erfindungsgemäßen Komplexe zu lösen vermag. Geeignete Lösungsmittel oder Lösungsmittelgemische können anhand bekannter Löslichkeitsdaten oder aufgrund einfacher Vorversuche ausgewählt werden.

Die erfindungsgemäßen Komplexe und das erfindungsgemäße Verfahren zu ihrer Herstellung weist zahlreiche besondere unerwartete Vorteile auf.

So lassen sich mit Hilfe des erfindungsgemäßen Verfahrens einphasige flüssigkristalline Polymerblends aus mindestens zwei amorphen, kristallinen oder flüssigkristallinen Polymeren (A) erhalten, welche ansonsten völlig oder weitgehend miteinander unverträglich sind. Methodisch weist die Herstellung der erfindungsgemäßen einphasigen flüssigkristallinen Polymerblends keine Besonderheiten auf, sondern erfolgt wie vorstehend beschrieben, nur daß anstelle eines Polymeren (A) oder mindestens zweier völlig oder weitgehend miteinander verträglicher Polymeren (A), mindestens zwei völlig oder weitgehend miteinander unverträgliche Polymere (A) zur Reaktion mit der niedermolekularen Verbindung oder dem Polymeren (B) gebracht werden.

Somit verbessert das erfindungsgemäße Verfahren die Zugänglichkeit polymerer diskotisch flüssigkristalliner Phasen in einem bislang nicht als möglich erachteten Ausmaß. Hierzu sind keinerlei neue und in ihrem Erfolg schwer abschätzbare Synthesen neuer mesogener, diskotisch flüssigkristalline Phasen bildender Polymere notwendig, sondern die diskotisch flüssigkristallinen Phasen können gezielt durch einfaches Mischen bereits bekannter, z.T. im Handel erhältlicher Komponenten, welche für sich allein noch nicht einmal mesogene Eigenschaften haben müssen, erzeugt werden.

Darüber hinaus kann der Existenzbereich der diskotisch flüssigkristallinen Phase und ihr Ordnungszustand über die Wahl der Komponenten und/oder deren Mischungsverhältnis gezielt eingestellt werden. In gleicher Weise können die Übergänge in den Glaszustand (g) oder in die isotrope Phase (i) dem jeweiligen Verwendungszweck angepaßt werden.

Ferner können farbige oder gegenüber Licht sensibilisierte diskotisch flüssigkristalline Phasen in einfacher Weise hergestellt werden.

Die erfindungsgemäßen Komplexe und einphasigen flüssigkristallinen Polymerblends weisen allesamt mindestens eine diskotisch flüssig kristalline Phase auf, welche beispielsweise

(i) eine Positions- und eine Fernordnung von Kolumnen, deren Moleküle in regelmäßigen oder unregelmäßigen Abständen übereinander gestapelt sind (z.B. "discotic hexagonal ordered", $D_{ho}$);

(ii) ausschließlich eine Orientierungsfernordnung von Kolumnen, deren Moleküle in regelmäßigen oder unregelmäßigen Abständen übereinander gestapelt sind (z.B. "nematic columnar", $N_c$); oder

(iii) ausschließlich eine Orientierungsfernordnung von einzelnen scheibchenförmigen Verbindungen, sogenannten "Diskoiden" ("discotic nematic", $N_D$); aufweisen kann.

Außerdem können die erfindungsgemäßen Komplexe für verschiedene Anwendungszwecke leicht mit Zusatzstoffen wie niedermolekularen, mesogenen, diskotisch flüssigkristalline Phasen bildenden Verbindungen, pleiochroitischen Farbstoffen, Sensibilisatoren, verträglichen Polymeren, Füllstoffen und/oder Verstärkerfüllstoffen vermischt werden, wobei dann die Art und Menge der Zusatzstoffe generell so gewählt wird, daß sie die Bildung und die Stabilität der betreffenden diskotisch flüssigkristallinen Phase nicht beeinträchtigen.

Die erfindungsgemäßen Komplexe und einphasigen flüssigkristallinen Polymerblends, insbesondere diejenigen, welche man mit Hilfe der erfindungsgemäßen Verfahren hergestellt hat, können mit Vorteil als elektrisch leitende oder photoleitende Materialien und/oder als homogene optisch einachsige Materialien in Dehnungssensoren, elektrophotographischen Aufzeichnungselementen, elektrooptischen Anzeigen, optischen Speicherelementen und laseroptischen Datenplatten verwendet werden.

Hierbei ergeben sich weitere Vorteile, wenn die erfindungsgemäßen Verfahren für die Herstellung der erfindungsgemäßen Komplexe und einphasigen flüssigkristallinen Polymerblends in die Herstellverfahren der betreffenden Dehnungssensoren, Aufzeichnungselemente, Anzeigen, Speicherelemente und Datenplatten integriert werden.

Beispielsweise kann ein elektrophotographisches Aufzeichnungselement in der Weise hergestellt werden, daß zunächst eine Lösung eines Polymers (A), einer niedermolekularen Verbindung (B) und, sofern erforderlich, eines Sensibilisators hergestellt und auf üblichen und bekannten dimensionsstabilen elektrisch leitfähigen Träger aufgetragen wird, so daß nach dem Trocknen der hierbei resultierenden Naßschicht eine 0,1 bis 50 µm dicke photoleitende Aufzeichnungsschicht entsteht. Diese photoleitende Aufzeichnungsschicht kann dann in üblicher und bekannter Weise zur Herstellung von Photokopien, Offsetdruckplatten oder Photoresisten verwendet werden.

Beispiele

In den folgenden Beispielen wurde die Struktur der diskotisch flüssigkristallinen Phasen anhand von Röntgenflachkammeraufnahmen an gestreckten Proben der erfindungsgemäßen Komplexe in üblicher und bekannter Weise bestimmt. Hierbei wurde Nickel-gefilterte $CuK_{\alpha}$-Strahlung verwendet, und es wurde der Röntgenstrahl senkrecht und parallel zur Verstreckungsrichtung eingestrahlt.

Die polarisationsmikroskopischen Untersuchungen zur Bestimmung des Phasenübergangsverhaltens wurden in üblicher und bekannter Weise mit Hilfe eines Mikroskops, Marke Ortholux II POL-BK, der Firma Leitz durchgeführt.

Die differentialkalorimetrischen Messungen zur Bestimmung der Phasenübergangstemperaturen wurden in üblicher und bekannter Weise mittels eines Differentialkalorimeters DSC-4, der Firma Perkin-Elmer durchgeführt.

Beispiele 1 bis 8

Herstellung und Eigenschaften der erfindungsgemäßen Komplexe; allgemeine Versuchsvorschrift:

Für die Beispiele 1 bis 8 wurden jeweils Lösungen aus unterschiedlichen Polymeren (A) und 2,4,7-Trinitrofluorenon (B) oder 2,4,7-Trinitrofluorenyliden-9-malonsäuredinitril (B) in unterschiedlichen Molverhältnissen hergestellt. Hierbei wurden als Lösungsmittel Dichlormethan oder Tetrahydrofuran verwendet. Nach vollständiger Umsetzung ihrer wesentlichen Bestandteile (A) und (B) wurden die erfindungsgemäßen Komplexe isoliert und physikalisch charakterisiert.

Hierbei wurde bei den Beispielen 1 und 2 das Polymer (A-2) der folgenden Spezifikation verwendet: Gelpermeationschromatographisch ermitteltes massenmittleres Molekulargewicht $\overline{M}_w$ = 3,8 • $10^5$, entsprechend einem Polymerisationsgrad P von 370. Das Polymere (A-2) ging bei -6 °C direkt vom Glaszustand (g) in die isotrope Phase (i) über. Bei der Zugabe von 2,4,7-Trinitrofluorenon zu den betreffenden Lösungen erfolgte ein Farbumschlag von farblos (in $CH_2Cl_2$) oder gelb (in Tetrahydrofuran) nach violett.

Bei Beispiel 3 wurde das Polymer (A-1) mit einem durch Gelpermeationschromatographie ermittelten massenmittleren Molekulargewicht $\overline{M}_w$ von 3,8 bis 4,3 • $10^6$, entsprechend den Polymerisationsgraden P von 3900 bis 5500, verwendet. Das Polymer (A-1) ging bei 30 °C direkt vom Glaszustand (g) in die isotrope Phase (i) über. Auch hier erfolgte bei Zugabe von 2,4,7-Trinitrofluorenon zur Lösung ein Farbumschlag von farblos bis leicht gelb nach violett.

Für die Beispiele 4, 5 und 8 wurde das Polymere (A-6) mit einem durch Gelpermeationschromatographie ermittelten massenmittleren Molekulargewicht $\overline{M}_w$ von 1,3 • $10^4$, entsprechend einem Polymerisationsgrad P von 14, verwendet, welches bei 35 °C vom Glaszustand (g) direkt in die isotrope Phase (i) überging. Hier erfolgte bei Zugabe von 2,4,7-Trinitrofluorenon oder 2,4,7-Trinitrofluorenyliden-9-malonsäuredinitril zur Lösung ein Farbenumschlag von farblos bis leicht gelb nach rot.

Für die Beispiele 6 und 7 wurde das Polymer (A-4) mit einem durch Gelpermeationschromatographie ermittelten massenmittleren Molekulargewicht $\overline{M}_w$ von 2 • $10^4$, entsprechend einem Polymerisationsgrad P von 25, verwendet. Das Polymer (A-4) ging bei 50 °C vom Glaszustand (g) in die $D_{ho}$-Phase und von da aus bei 220 °C in die isotrope Phase (i) über. Bei der Zugabe von 2,4,7-Trinitroflurenon zur Lösung erfolgte eim Farbumschlag von farblos bis leicht gelb nach dunkelrot bis schwach violett.

Die Zusammensetzung der erfindungsgemäßen Komplexe der Beispiele 1 bis 8 und ihr Phasenübergangsverhalten wird in der Tabelle 1 im Überblick wiedergegeben.

Tabelle 1:

| Zusammensetzung und Eigenschaften erfindungsgemäßer diskotisch flüssigkristalliner Ladungsübertragungs(charge transfer)-Komplexe | | | | |
|---|---|---|---|---|
| Bsp. | Zusammensetzung: | | | Phasenübergangsverhalten |
| | Polymer (A) | Verbindung (B) | Molverhältnis (A) : (B) | °C |
| 1 | (A-2) | TNF [a] | 4 : 1 | g 10 $N_c$ 47 i |
| 2 | (A-2) | TNF [a] | 3 : 1 | g 10 $N_c$ 88 i |
| 3 | (A-1) | TNF [a] | 3 : 1 | g 50 $N_c$ 170 i |
| 4 | (A-6) | TNF [a] | 2 : 1 | g 22 $D_{ho}$ 83 i |
| 5 | (A-6) | TNF [a] | 1 : 1 | g 17 $D_{ho}$ 76 i |
| 6 | (A-4) | TNF [a] | 2 : 1 | g 50 $D_{ho}$ 244 i |
| 7 | (A-4) | TNF [a] | 3 : 1 | g 50 $D_{ho}$ 246 i |
| 8 | (A-6) | TNF-CN [b] | 2 : 1 | g 40 $D_{ho}$ 165 i |

[a] = 2,4,7-Trinitrofluorenon;
[b] = 2,4,7-Trinitrofluorenyliden-9-malonsäuredinitril;

Beispiel 9

Herstellung und Eigenschaften eines erfindungsgemäßen einphasigen flüssigkristallinen Polymerblends; Versuchsvorschrift:

Das Polymere (A-3), welches bei -10°C aus dem Glaszustand (g) in die kristalline Phase (k) und bei 20°C in die isotrope Phase (i) überging, und das Polymere (A-2) gemäß den Beispielen 1 und 2 wurden im Molverhältnis (A-3) : (A-2) = 1 : 1 in Tetrahydrofuran gelöst. Beide Polymere (A-3) und (A-2) sind ohne die Gegenwart eines Lösungsmittels miteinander völlig unverträglich. Zu der Lösung der Polymeren (A-3) und (A-2) wurde 2,4,7-Trinitrofluorenon (B) zugegeben, so daß ein Molverhältnis [(A-3) + (A-2)] : (B) von 1,66 : 1 resultierte. Bei der Zugabe von (B) erfolgte in der Lösung ein Farbumschlag von farblos bis leicht gelb nach violett. Nach längerer Reaktionszeit wurde der erfindungsgemäße einphasige Polymerblend durch Eindampfen der Lösung isoliert. Er ging bei -13°C von dem Glaszustand (g) in die $N_c$-Phase und bei 89°C in die isotrope Phase (i) über.

Beispiel 10

Verwendung der erfindungsgemäßen Komplexe in der Elektrophotographie; Versuchsvorschrift:

Beispiel 3 wurde wiederholt, nur daß der Lösung noch der übliche und bekannte Sensibilisatorfarbstoff Rhodamin B in einem Molverhältnis von [(A) + (B)] : Sensibilisator = 1000 : 1 zugesetzt wurde. Die resultierende Lösung wurde auf einen elektrisch leitfähigen dimensionstabilen Träger (aluminiumbeschichtete Polyethylenterephthalatfolie) ausgegossen, so daß nach dem Trocknen der Naßschicht bei 100°C eine 1 µm dicke photoleitende Aufzeichnungsschicht aus dem sensibilisierten erfindungsgemäßen Komplex des Beispiels 3 resultierte.

Das in dieser Weise erhaltene elektrophotographische Aufzeichnungselement wurde in üblicher und bekannter Weise mit einer Hochspannungscorona aus einem Abstand von 1 cm auf ein Potential von -1000 V aufgeladen und hiernach durch eine Negativvorlage hindurch bildmäßig belichtet, wodurch die Aufzeichnungsschicht in den belichteten Stellen elektrisch leitend wurde, so daß die Ladung an diesen Stellen über den elektrisch leitfähigen Träger abfließen konnte. Das hierdurch erhaltende latente elektrostatische Ladungsbild wurde in üblicher und bekannter Weise betonert, wonach das resultierende Tonerbild auf ein

Papier übertragen und dort fixiert wurde. Das übertragene und fixierte Tonerbild, d.i. die Photokopie, gab die Motive der Negativvorlage detailgetreu wieder. Der Photokopiervorgang konnte problemlos mit dem Aufzeichnungselement wiederholt werden, ohne daß sich die Abbildungsqualität verschlechterte.

## Ansprüche

1. Polymere diskotisch flüssigkristalline Ladungsübertragungs(charge transfer)-Komplexe aus

A) mindestens einem Polymeren, welches Gruppen chemisch gebunden enthält, die

$a_1$) für sich allein keine flüssigkristalline Phase bilden,

$a_2$) für sich allein eine calamitisch flüssigkristalline Phase bilden oder die

$a_3$) für sich allein eine diskotisch flüssigkristalline Phase bilden, und

B) mindestens einer niedermolekularen Verbindung oder einem Polymeren mit Elektronenakzeptor- oder Elektronendonorwirkung.

2. Polymere diskotisch flüssigkristalline Ladungsübertragungs(charge transfer)-Komplexe nach Anspruch 1, dadurch gekennzeichnet, daß die im Polymer (A) chemisch gebundenen Gruppen ($a_1$), ($a_2$) und/oder ($a_3$) Elektronendonorwirkung haben, wogegen die niedermolekulare Verbindung oder das Polymer (B) Elektronenakzeptorwirkung hat.

3. Polymere diskotisch flüssigkristalline Ladungsübertragungs(charge transfer)-Komplexe nach Anspruch 1, dadurch gekennzeichnet, daß die im Polymer (A) chemisch gebundenen Gruppen ($a_1$), ($a_2$) und/oder ($a_3$) Elektronenakzeptorwirkung haben, wogegen die niedermolekulare Verbindung oder das Polymer (B) Elektronendonorwirkung hat.

4. Polymere diskotisch flüssigkristalline Ladungsübertragungs(charge transfer)-Komplexe nach einem der Ansprüche 1 bis 3, dadurch gekennzeichnet, daß die chemisch gebundenen Gruppen ($a_1$), ($a_2$) und/oder ($a_3$) Bestandteil der Polymerhauptkette des Polymers (A) sind.

5. Polymere diskotisch flüssigkristalline Ladungsübertragsungs(charge transfer)-Komplexe nach einem der Ansprüche 1 bis 3, dadurch gekennzeichnet, daß die chemisch gebundenen Gruppen ($a_1$), ($a_2$) und/oder ($a_3$) als seitenständige Gruppen über einen flexiblen abstandshaltenden Molekülteil mit der Polymerhauptkette des Polymers (A) verknüpft sind.

6. Polymere diskotisch flüssigkristalline Ladungsübertragungs(charge transfer)-Komplexe nach einem der Ansprüche 2, 4 oder 5, dadurch gekennzeichnet, daß die niedermolekulare Verbindung (B) eine aromatische Verbindung ist, welche Halogenatome und/oder Nitro-, Cyano- und/oder Chinongruppen aufweist, und daß das Polymer (B) ein Polymer ist, welches Halogenatome und/oder Nitro-, Cyano- und/oder Chinongruppen enthaltende aromatische Gruppen umfaßt.

7. Polymere diskotisch flüssigkristalline Ladungsübertragungs(charge transfer)-Komplexe nach Anspruch 6, dadurch gekennzeichnet, daß es sich bei der niedermolekularen Verbindung (B) um 2,4,7-Trinitrofluorenon oder 2,4,7-Trinitrofluorenyliden-9-malonsäuredinitril handelt.

8. Polymere diskotisch flüssigkristalline Ladungsübertragungs(charge transfer)-Komplexe nach Anspruch 6, dadurch gekennzeichnet, daß das Polymer (B) Gruppen enthält, welche sich von 2,4,7-Trinitrofluorenon oder 2,4,7-Trinitrofluorenyliden-9-malonsäuredinitril ableiten.

9. Verfahren zur Herstellung diskotisch flüssigkristalliner Phasen, dadurch gekennzeichnet, daß man hierbei mindestens ein amorphes, ein kristallines oder ein flüssigkristallines Polymer (A), welches Gruppen ($a_1$), ($a_2$) und/oder ($a_3$) gemäß Anspruch 1 chemisch gebunden enthält, mit mindestens einer niedermolekularen Verbindung oder einem Polymeren (B) mit Elektronenakzeptor- oder Elektronendonorwirkung umsetzt.

10. Verfahren zur Herstellung einphasiger flüssigkristalliner Polymerblends aus mindestens zwei Polymeren, dadurch gekennzeichnet, daß man hierbei

a) mindestens zwei miteinander völlig oder weitgehend unverträgliche, amorphe, kristalline oder flüssigkristalline Polymere (A), welche chemisch gebundene Gruppen ($a_1$), ($a_2$) und/oder ($a_3$) enthalten, miteinander vermischt und hiernach

b) die resultierende Mischung mit mindestens einer niedermolekularen Verbindung oder einem Polymeren (B) mit Elektronenakzeptor- oder Elektronendonorwirkung umsetzt.

11. Verwendung der polymeren diskotisch flüssigkristallinen Ladungsübertragungs(charge-transfer)-Komplexe gemäß einem der Ansprüche 1 bis 8, der gemäß Anspruch 9 hergestellten polymeren diskotisch flüssigkristallinen Ladungsübertragungs(charge transfer)-Komplexe sowie der gemäß Anspruch 10 hergestellten einphasigen flüssigkristallinen Polymerblends als elektrisch leitende oder photoleitende Materialien und/oder als homogene optisch einachsige Materialien in Dehnungssensoren, elektrophotographischen Aufzeichnungselementen, elektrooptischen Anzeigen, optischen Speicherelementen und laseroptischen Datenplatten.

12. Elektrophotographisches Aufzeichnungselement mit einem dimensionsstabilen elektrisch leitfähigen Träger und einer photoleitenden Aufzeichnungsschicht, dadurch gekennzeichnet, daß die photoleitende Aufzeichnungsschicht hauptsächlich oder ausschließlich aus mindestens einem polymeren diskotisch flüssigkristallinen Ladungsübertragungs(charge transfer)-Komplex gemäß einem der Ansprüche 1 bis 8, und/oder mindestens einem gemäß Anspruch 9 hergestellten polymeren diskotisch flüssigkristallinen Ladungsübertragungs(charge transfer)-Komplex und/oder einem gemäß Anspruch 10 hergestellten einphasigen flüssigkristallinen Polymerblend besteht.

13. Das elektrophotographische Aufzeichnungselement nach Anspruch 12, dadurch gekennzeichnet, daß der oder mindestens einer der polymeren diskotisch flüssigkristallinen Ladungsübertragungs(charge transfer)-Komplexe oder einphasigen flüssigkristallinen Polymerblends chemisch gebundene Sensibilisatorgruppen enthält.

Patentansprüche für folgenden Vertragsstaat: ES

1. Verfahren zur Herstellung polymerer diskotisch flüssigkristalliner Ladungsübertragungs(charge transfer)-Komplexe, dadurch gekennzeichnet, daß man hierbei

A) mindestens ein Polymer, welches Gruppen chemisch gebunden enthält, die

$a_1$) für sich allein keine flüssigkristalline Phase bilden,

$a_2$) für sich allein eine calamitisch flüssigkristalline Phase bilden oder die

$a_3$) für sich allein eine diskotisch flüssigkristalline Phase bilden, mit

B) mindestens einer niedermolekularen Verbindung oder einem Polymeren mit Elektronenakzeptor- oder Elektronendonorwirkung

umsetzt.

2. Das Verfahren zur Herstellung polymerer diskotisch flüssigkristalliner Ladungsübertragungs(charge transfer)-Komplexe nach Anspruch 1, dadurch gekennzeichnet, daß die im Polymer (A) chemisch gebundenen Gruppen ($a_1$), ($a_2$) und/oder ($a_3$) Elektronendonorwirkung haben, wogegen die niedermolekulare Verbindung oder das Polymer (B) Elektronenakzeptorwirkung hat.

3. Das Verfahren zur Herstellung polymerer diskotisch flüssigkristalliner Ladungsübertragungs(charge transfer)-Komplexe nach Anspruch 1, dadurch gekennzeichnet, daß die im Polymer (A) chemisch gebundenen Gruppen ($a_1$), ($a_2$) und/oder ($a_3$) Elektronenakzeptorwirkung haben, wogegen die niedermolekulare Verbindung oder das Polymer (B) Elektronendonorwirkung hat.

4. Das Verfahren zur Herstellung polymerer diskotisch flüssigkristalliner Ladungsübertragungs(charge transfer)-Komplexe nach einem der Ansprüche 1 bis 3, dadurch gekennzeichnet, daß die chemisch gebundenen Gruppen ($a_1$), ($a_2$) und/oder ($a_3$) Bestandteil der Polymerhauptkette des Polymers (A) sind.

5. Das Verfahren zur Herstellung polymerer diskotisch flüssigkristalliner Ladungsübertragsungs(charge transfer)-Komplexe nach einem der Ansprüche 1 bis 3, dadurch gekennzeichnet, daß die chemisch gebundenen Gruppen ($a_1$), ($a_2$) und/oder ($a_3$) als seitenständige Gruppen über einen flexiblen abstandshaltenden Molekülteil mit der Polymerhauptkette des Polymers (A) verknüpft sind.

6. Das Verfahren zur Herstellung polymerer diskotisch flüssigkristalliner Ladungsübertragungs(charge transfer)-Komplexe nach einem der Ansprüche 2, 4 oder 5, dadurch gekennzeichnet, daß die niedermolekulare Verbindung (B) eine aromatische Verbindung ist, welche Halogenatome und/oder Nitro-, Cyano- und/oder Chinongruppen aufweist, und daß das Polymer (B) ein Polymer ist, welches Halogenatome und/oder Nitro-, Cyano- und/oder Chinongruppen enthaltende aromatische Gruppen umfaßt.

7. Das Verfahren zur Herstellung polymerer diskotisch flüssigkristalliner Ladungsübertragungs(charge transfer)-Komplexe nach Anspruch 6, dadurch gekennzeichnet, daß es sich bei der niedermolekularen Verbindung (B) um 2,4,7-Trinitrofluorenon oder 2,4,7-Trinitrofluorenyliden-9-malonsäuredinitril handelt.

8. Das Verfahren zur Herstellung polymerer diskotisch flüssigkristalliner Ladungsübertragungs(charge transfer)-Komplexe nach Anspruch 6, dadurch gekennzeichnet, daß das Polymer (B) Gruppen enthält, welche sich von 2,4,7-Trinitrofluorenon oder 2,4,7-Trinitrofluorenyliden-9-malonsäuredinitril ableiten.

9. Verfahren zur Herstellung einphasiger flüssigkristalliner Polymerblends aus mindestens zwei Polymeren, dadurch gekennzeichnet, daß man hierbei

a) mindestens zwei miteinander völlig oder weitgehend unverträgliche, amorphe, kristalline oder flüssigkristalline Polymere (A), welche chemisch gebundene Gruppen ($a_1$), ($a_2$) und/oder ($a_3$) enthalten, miteinander vermischt und hiernach

b) die resultierende Mischung mit mindestens einer niedermolekularen Verbindung oder einem Polymeren (B) mit Elektronenakzeptor- oder Elektronendonorwirkung umsetzt.

10. Verwendung der gemäß einem der Ansprüche 1 bis 8 hergestellten polymeren diskotisch flüssigkristallinen Ladungsübertragungs(charge- transfer)-Komplexe sowie der gemäß Anspruch 9 hergestellten

einphasigen flüssigkristallinen Polymerblends als elektrisch leitende oder photoleitende Materialien und/oder als homogene optisch einachsige Materialien in Dehnungssensoren, elektrophotographischen Aufzeichnungselementen, elektrooptischen Anzeigen, optischen Speicherelementen und laseroptischen Datenplatten.

11. Verfahren zur Herstellung von Photokopien, Offsetdruckplatten und Photoresisten, dadurch gekennzeichnet, daß man hierfür ein elektrophotographisches Aufzeichnungselement mit einem dimensionsstabilen elektrisch leitfähigen Träger und einer photoleitenden Aufzeichnungsschicht verwendet, worin die photoleitende Aufzeichnungsschicht hauptsächlich oder ausschließlich aus mindestens einem gemäß einem der Ansprüche 1 bis 8 hergestellten polymeren diskotisch flüssigkristallinen Ladungsübertragungs(charge transfer)-Komplex und/oder einem gemäß Anspruch 9 hergestellten einphasigen flüssigkristallinen Polymerblend besteht.

12. Das Verfahren nach Anspruch 11, dadurch gekennzeichnet, daß der oder mindestens einer der polymeren diskotisch flüssigkristallinen Ladungsübertragungs(charge transfer)-Komplexe oder einphasigen flüssigkristallinen Polymerblends chemisch gebundene Sensibilisatorgruppen enthält.